# EUROPÄISCHE PATENTSCHRIFT

(11) **EP 3 632 653 B1**
(45) Veröffentlichungstag und Bekanntmachung des Hinweises auf die Patenterteilung: **28.10.2020**
(21) Anmeldenummer: 19000431.7
(22) Anmeldetag: 27.09.2019
(51) Int. Cl.: B29C 51/26, B29C 51/42, B29C 51/46, B29C 51/16

(54) **VERFAHREN ZUM AUFBRINGEN EINES ETIKETTS AUF EIN TIEFGEZOGENES FORMTEIL UND FORMWERKZEUG ZUM DURCHFÜHREN DES VERFAHRENS**
METHOD FOR APPLYING A LABEL TO A DEEP-DRAWN MOULDED PART AND MOULD FOR CARRYING OUT SAID METHOD
PROCÉDÉ D'APPLICATION D'UNE ÉTIQUETTE SUR UNE PIÈCE MOULÉE EMBOUTIE ET OUTIL DE MOULAGE PERMETTANT LA MISE EN OUVRE DUDIT PROCÉDÉ

(30) Priorität: 04.10.2018 DE 102018007824
(43) Veröffentlichungstag der Anmeldung: 08.04.2020
(73) Patentinhaber: Kiefer Werkzeugbau GmbH, 74193 Schwaigern (DE)
(72) Erfinder: Kiefer, Ulrich, 74193 Schwaigern (DE)

(56) Entgegenhaltungen:
- EP-A1- 0 483 849
- EP-A2- 0 569 846
- DE-B4-102007 011 292

## Beschreibung

Die Erfindung betrifft ein Verfahren zum Aufbringen eines Etiketts auf ein Formteil während des Tiefziehens aus einer erwärmten thermoplastischen Kunststofffolie nach der Gattung des Hauptanspruches sowie ein Formwerkzeug zum Durchführen des Verfahrens.

Aus der DE 10 2007 011 292 B4 ist es bekannt, auf eine Fläche eines Formteils ein Etikett während oder kurz nach dem Tiefziehvorgang aufzubringen, und zwar auf die Seite des Formteils, die von den formgebenden Bauteilen abgewandt ist. Dies erfolgt über eine verschiebbaren Anpressplatte, auf die vor dem Schließen des Formwerkzeugs das Etikett aufgelegt, dort gehalten und das während oder unmittelbar nach dem Tiefziehen des Formteils gegen die von den formgebenden Bauteilen abgewandte Oberfläche des Formteils gepresst wird.
Prinzipiell ist es bekannt, die formgebenden Bauteile eines Formwerkzeugs zu kühlen, um eine rasche Abkühlung und ein baldiges Entformung der Formteile vornehmen zu können. Um folglich eine hohe Leistung zu erzielen. Da die Kühlung der Fläche nur von einer Seite erfolgt, die andere Seite wird nur von der Umgebungsluft gekühlt, entsteht über die Dicke des Formteils ein Temperaturgefälle. Ein Temperaturausgleich findet erst nach dem Entformen statt. Je größer dieser Temperaturunterschied ist umso größer ist die Gefahr eines Verzugs des Formteils, das als Folge nicht plan bleibt. Dem entgegnet man durch längeres Kühlen des Formteils im Formwerkzeug, was die Taktzeit negativ beeinflusst. Diese Gefahr des Verzugs ist besonders groß, wenn ein Etikett auf die Außenfläche des Formteils aufgebracht wird. Etiketten aus einem anderen Werkstoff als das Formteil haben ein anderes Wärmeleitverhalten, anderes Wärmeabstrahlverhalten und eine andere Wärmekapazität als der Kunststoff des Formteils. Die Verzugsgefahr wird dadurch erhöht, die Taktzeit muss entsprechend verlängert werden. Ein Verzug der Formteile führt zu verschiedenen Problemen beim Stapeln der Formteile sowie bei deren Entstapeln, wenn sie auf andere Formteile aufgelegt werden sollen, beispielsweise nach deren Befüllen. Durch Verlängern der Kühlzeit könnte man dem entgegnen, was aber die Leistung des Formwerkzeugs reduziert.

Der Erfindung liegt die Aufgabe zugrunde, das Verfahren so vorzunehmen, dass verzugsfreie oder zumindest verzugsarme etikettierte Formteile ohne Verlängerung der Taktzeit hergestellt werden können. Das Formwerkzeug zur Durchführung des Verfahrens sollte entsprechend gestaltet sein, um dies zu erzielen.

Zur Lösung der Aufgabe wird ein Verfahren mit den Merkmalen des Anspruches 1 vorgeschlagen. Das Formwerkzeug zum Durchführen des Verfahrens ist in Anspruch 3 beansprucht. Weiterbildungen des Verfahrens und des Formwerkzeugs sind in den Unteransprüchen beschrieben. Dadurch, dass die Anpressplatte, die das Etikett aufnimmt und anpresst, gekühlt wird, erfolgt eine Kühlung des Formteils an dieser flachen Stelle von beiden Seiten. Dadurch kann der Verzug deutlich reduziert werden ohne Verlängerung der Kühlzeit.

Ausführungsbeispiele der Erfindung sind in den Figuren 1 bis 3 dargestellt. Es zeigt:
- Figur 1: einen Querschnitt durch ein kombiniert formendes und stanzendes Formwerkzeug in einer ersten Ausführungsvariante in geschlossenem Zustand.
- Figur 2: denselben Querschnitt in geöffnetem Zustand des Formwerkzeugs.
- Figur 3: einen Teilschnitt durch ein kombiniert formendes und stanzendes Formwerkzeug in einer zweiten Ausführungsvariante in geschlossenem Zustand.

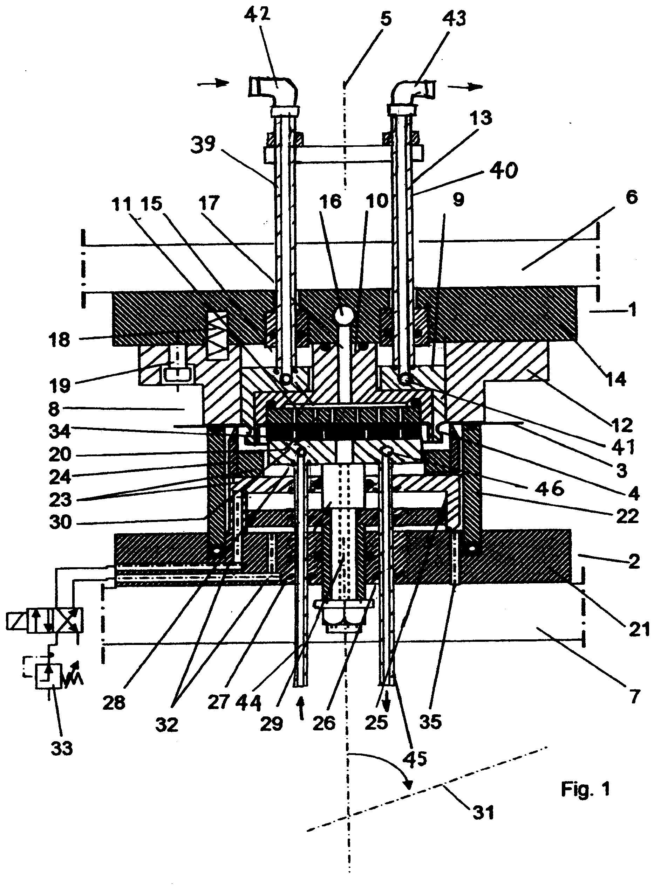

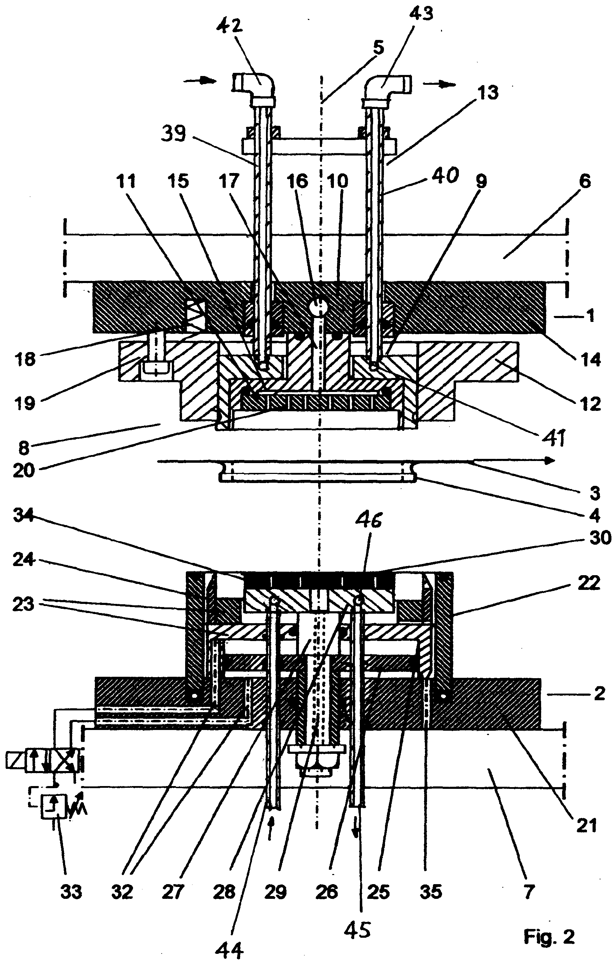

In den Figuren 1 und 2 ist ein kombiniert formendes und stanzendes Formwerkzeug nach einer ersten Ausführungsvariante zum Durchführen des Verfahrens dargestellt. Es besteht aus einem Oberteil 1 und einem Unterteil 2, die relativ zueinander verschiebbar sind und im Zusammenwirken eine erwärmte Folienbahn 3 aus thermoplastischem Kunststoff zu einem Formteil 4 mittels Differenzdruck - Druckluft und/oder Vakuum - tiefziehen und dieses ausstanzen. Das Formwerkzeug ist in die Formstation 5 einer Thermoformmaschine eingebaut, die hierzu einen Obertisch 6 und einen Untertisch 7 aufweist. Im dargestellten Beispiel befinden sich die formgebenden Bauteile 8 für das Formteil 4 im Oberteil 1. Sie setzen sich pro Formnest zusammen aus dem Außenteil 9, dem Innenteil 10 und dem Bodenteil 11. Alle Außenteile 9 des Formwerkzeugs, das meist mehrere Formnester einreihig oder mehrreihig aufweist, sitzen in der Matrize 12 in einem entsprechenden Durchbruch und sind zu dieser verschiebbar, indem sie an über nicht dargestellte Antriebe verschiebbaren Stangen 13 gehalten sind. Die Matrize 12 sitzt an der axial verschiebbaren Kopfplatte 14, in der die Stangen 13 geführt sind. Die Verschiebung der Matrize 12 erfolgt durch Federn 18, sie wird gehalten von Bundschrauben 19. An der Matrize 12 ist das Innenteil 10 befestigt, an diesem das Bodenteil 11 in der Weise, dass ein Hohlraum 15 zum Anlegen eines Vakuums gebildet wird. Dieses wird über die Bohrungen 16, 17 zugeführt und wirkt über Bohrungen 20 im Bodenteil 11 am Formteil 4. Zur Temperierung der formgebenden Bauteile 8 sind in bekannter Weise innen hohle Stangen 39, 40 vorgesehen, die mit dem Außenteil 9 verbunden sind, wobei im Innern des Außenteils 9 Bohrungen 41 zu deren Temperierung, meist Kühlung, verlaufen. Die Stange 39 ist mit einer Zuführung 42 für ein Temperiermedium versehen, die Stange 40 weist einen Abfluss 43 für das Temperiermedium auf.

Das Unterteil 2 setzt sich aus der Grundplatte 21, dem Klemmrahmen 22 und pro Formnest aus der Messerhalterung 23 und dem Schnittmesser 24 mit der Kontur des auszustanzenden Formteils 4 zusammen. Dabei weist die Messerhalterung 23 im Innern eine Bohrung 25 auf, in der ein Kolben 26 verschiebbar geführt ist. Am Kolben 26 ist ein Bolzen 27 befestigt, der andererseits mit der Anpressplatte 28 verbunden ist. Diese Anpressplatte 28 kann über eine Bohrung 29 im Bolzen 27 mit einer nicht dargestellten Vakuumquelle in Verbindung bebracht werden, sodass ein Etikett 30 angesaugt werden kann.
Erfindungsgemäß ist die Anpressplatte 28 mit einer Temperiereinrichtung versehen. Sie besteht aus zwei mit der Anpressplatte 28 verbundenen innen hohlen Stangen 44, 45, wobei eine Stange 44 mit einer Zuführung für ein Temperiermedium verbunden ist, die andere Stange 45 mit einer Abführung für das Temperiermedium. Im Innern der Anpressplatte 28 verlaufen Bohrungen 46, die Zufluss und Abfluss verbinden.

Beim Formwerkzeug nach den Figuren 1 und 2 findet folgender Verfahrensablauf, ausgehend von Figur 1, statt. Dabei wird davon ausgegangen, dass kurz zuvor pro Formnest ein Etikett 30 auf die Anpressplatte 28 aufgelegt und dort angesaugt wurde. Dies kann auf folgende Weise erfolgt sein:
Entweder das Formwerkzeug besteht aus zwei horizontal verschiebbaren Unterteilen 2, die abwechselnd außerhalb und in der Formstation 5 zu liegen kommen und in dieser Position außerhalb der Formstation 5 beschickt werden, während mit dem zweiten Unterteil 2 das Verformen in der Formstation 5 stattfindet.
Oder das Unterteil 2 ist schwenkbar ausgebildet und wird in der geschwenkten Position - dargestellt durch die Mittellinie 31 - beschickt und dann zurückgeschwenkt in die in Figur 1 und 2 dargestellte Lage.
Oder das Formwerkzeug wird soweit axial geöffnet, dass mit einer Beschickungseinrichtung die Etiketten 30 auf die Anpressplatten 28 aufgelegt werden können.
Gleichzeitig mit dem Beschicken aller Anpressplatten 28 des Formwerkzeugs mit Etiketten 30 wird in allen beschriebenen Fällen ein erwärmter Abschnittes der Folienbahn 3 zwischen das geöffnete Formwerkzeug gebracht, das daraufhin geschlossen wird. Dabei erfolgt zunächst ein Einspannen des Folienbahnabschnittes zwischen Klemmrahmen 22 und Matrize 12. Die Matrize 12 weicht zurück und durch Vakuum über die Bohrungen 16, 17 und/oder Druckluft über die Formluftbohrungen 35 erfolgt das Ausformen der Formteile 4 und am Ende des Ausformens deren Ausstanzen mit den Schnittmessern 24. Gleichzeitig mit dem Ausformen des Formteils 4 oder unmittelbar nach dessen Abschluss wird der Kolben 26 mittels Druckluft, zugeführt über eine Bohrung 32 in der Grundplatte 21, und der Bolzen 27 nach oben gedrückt. Dadurch wird das auf der Anpressplatte 28 liegende Etikett 30 gegen das Formteil 4 gepresst, das sich mit dem noch warmen Kunststoff verbindet.

Bedingt durch die beschriebene Kühleinrichtung für die Anpressplatte 28 erfolgt auch von der Seite des Etiketts 30 aus eine Kühlung des Formteils 4, sodass einem Verzug in Verbindung mit der Kühlung der formgebenden Bauteile 8 wirksam entgegnet werden kann.
Prinzipiell ist es dabei möglich, das Temperieren der Anpressplatte 28 in der Weise vorzunehmen, dass über einen nicht dargestellten Temperatursensor ihre Temperatur erfasst und auf einen vorgegebenen Wert geregelt wird. Dieser Wert kann gleich sein wie der Temperaturwert der formgebenden Bauteile 8, er kann aber auch unterschiedlich sein. Durch Versuche kann das optimale Temperaturverhalten der Bauteile ermittelt werden.

Eine weitere vorteilhafte Kühlung der Formteile 4 im Bereich des Etiketts 30 kann auf die Weise erfolgen, dass die Bohrung 29 zum Anlegen von Vakuum zum Ansaugen der Etiketten 30 nach dem Anpressen des Etiketts 30 an das Formteil 4 umgeschaltet wird auf Druckluftzufuhr. Diese strömt dann über die Oberfläche des Etiketts 30 und trägt zu deren Kühlung in vorteilhafter Weise bei.

Es hat sich als vorteilhaft erwiesen, die Anpressplatte 28 nach dem anpressen eines Etiketts 30 in dieser ausgefahrenen Position zu belassen, um nach dem Öffnen des Formwerkzeugs ein Etikett 30 leichter auf diese auflegen zu können. Erst vor dem Schließen des Formwerkzeugs wird dann der Kolben 26 mit der Anpressplatte 28 zurückgezogen, damit eine Berührung der Anpressplatte 28 bzw. des auf ihr liegenden Etiketts 30 mit der Folienbahn 3 beim Schließen des Formwerkzeugs verhindert ist.

Das beschriebene Verfahren findet in gleicher Weise mit denselben Vorteilen bei einem nur formend ausgebildeten Formwerkzeug statt, bei dem das Schnittmesser 24 nicht eingebaut ist. Das Ausstanzen der Formteile 4 findet in diesem Fall in einer nachgeordneten Station statt.

Nach dem öffnen des Formwerkzeugs mit dem Entformen eventueller Hinterschnitte des Formteils 4 in an sich bekannter Weise wird die Folienbahn 3 weitertransportiert und nimmt dabei die noch an kleinen Stegen mit ihr verbundenen - oder bei nur formendem Betrieb ganz mit der Folienbahn 3 verbundenen - Formteile 4 bis zu einer nachgeschalteten Stapeleinrichtung und ggf. zu einer Stanzeinrichtung mit.

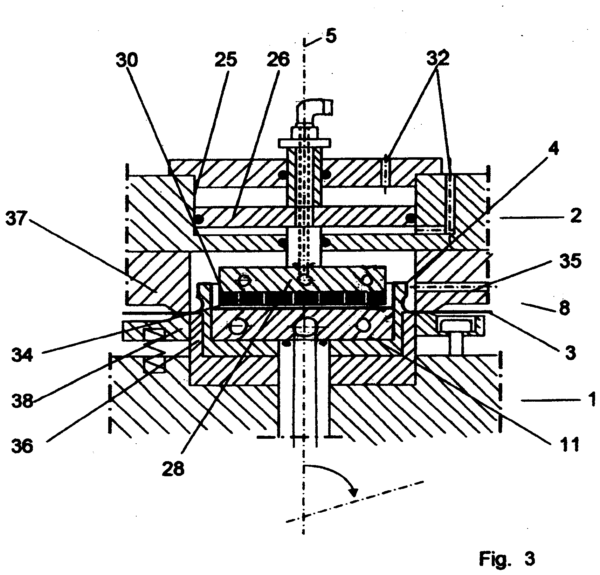

Das erfindungsgemäße Verfahren kann genauso angewendet werden, wenn flache Formteile 4 nur negativ tiefgezogen werden, wie es in Figur 3 in einem Teilbereich des Formwerkzeugs bei einem formenden und stanzenden Formwerkzeug dargestellt ist, wobei das Ausstanzen mittels der Schertechnik, also im Durchfallschnitt, erfolgt. Dazu ist das Außenteil als Schnittstempel 36 ausgebildet, das mit einer am Unterteil 2 angeordneten Schnittplatte 37 zusammenwirkt. Um den Schnittstempel 36 ist ein Abstreifer 38 vorgesehen.

Diese Figur 3 zeigt auch, dass es genauso möglich ist, das Oberteil 1 des Formwerkzeugs am Untertisch 7 der Thermoformmaschine zu montieren und das Unterteil 2 mit den formgebenden Bauteile 8 am Obertisch 6. Moderne Thermoformmaschinen sind bauseits so gestaltet, dass wahlweise gearbeitet werden kann. Bei dieser Art des Ausstanzens der Formteile 4 ist es möglich, den Untertisch 7 der Thermoformmaschine wie bereits beschrieben abkippbar zu gestalten und in abgekipptem Zustand - wie in Figur 1 durch die Mittellinie 31 angedeutet - sowohl das Auswerfen der ausgestanzten Formteile 4 als auch das Beschicken aller Platten 34 mit Etiketten 30 vorzunehmen.

Es wird vorgeschlagen, das Anpressen des Etiketts 30 über einen pneumatisch betätigten Kolben 26 wie in den Figuren 1 bis 3 dargestellt vorzunehmen, da dann eine hohe Anpresskraft erzeugt werden kann. Und zwar auch dann, wenn das Tiefziehen der Formteile 4 mit Druckluft in an sich bekannter Weise erfolgt. In diesem Fall wirkt eine Kraft auf die Anpressplatte 28 entgegen der Anpressrichtung beim Etikettieren, wenn sich die Formluft aufbaut. Diese Gegenkraft ist abhängig vom Durchmesser des Kolbens 26 und dem Durchmesser des Bolzens 27 und dem Druck der Formluft. Wenn der Kolben 26 jedoch vorzugsweise einen wesentlich größeren Durchmesser aufweist als das Etikett 30 ist immer eine hohe Anpresskraft auch bei der Druckluftformung gegeben. Durch ein Druckregelventil 33 in der Zuleitung der Druckluft zum Kolben 26 kann die Anpresskraft leicht verändert und den optimalen Erfordernissen angepasst werden. Vorteilhafterweise wird die Anpressplatte 28 auf der dem Etikett 30 zugewandten Flächen mit einer Platte 34 aus einem elastischen Material versehen. Auf diese Weise wird eine gleichmäßige allseits wirkende Anpressung erzielt. Diese Platte 34 ist luftdurchlässig gestaltet.

In der Praxis hat es sich gezeigt, dass durch die Kühlung der Anpressplatte 28 im Formwerkzeug insgesamt eine unterschiedliche Temperaturverteilung erfolgt. Dadurch kann es zu unterschiedlichen Reibungsverhältnissen kommen die es vorteilhaft machen, alle Bolzen 27 über eine nicht dargestellte Platte zu verbinden, sodass eine synchrone Bewegung aller Anpressplatten 28 erfolgt.

### Bezugszeichentabelle

- 1: Oberteil
- 2: Unterteil
- 3: Folienbahn
- 4: Formteil
- 5: Formstation
- 6: Obertisch
- 7: Untertisch
- 8: Formgebende Bauteile
- 9: Außenteil
- 10: Innenteil
- 11: Bodenteil
- 12: Matrize
- 13: Stange
- 14: Kopfplatte
- 15: Hohlraum
- 16: Bohrung
- 17: Bohrung
- 18: Feder
- 19: Bundschraube
- 20: Bohrung
- 21: Grundplatte
- 22: Klemmrahmen
- 23: Messerhalterung
- 24: Schnittmesser
- 25: Bohrung
- 26: Kolben
- 27: Bolzen
- 28: Anpressplatte
- 29: Bohrung
- 30: Etikett
- 31: Mittellinie
- 32: Bohrung
- 33: Druckregelventil
- 34: Platte
- 35: Formluftbohrung
- 36: Schnittstempel
- 37: Schnittplatte
- 38: Abstreifer
- 39: Stange
- 40: Stange
- 41: Bohrung
- 42: Zuführung
- 43: Abfluss
- 44: Stange
- 45: Stange
- 46: Bohrung

## Patentansprüche

1. Verfahren zum Aufbringen eines Etiketts auf ein aus einer erwärmten thermoplastischen Kunststofffolie mittels eines Formwerkzeugs tiefgezogenes Formteil (4) während oder unmittelbar nach Abschluss des Tiefziehvorganges, während sich das Formteil (4) noch im Formwerkzeug befindet, wobei das Formwerkzeug aus einem Oberteil (1) mit formgebenden Bauteile (8) und einem Unterteil (2) mit pro Formnest einer verschiebbaren Anpressplatte (28) besteht, auf die vor dem Schließen des Formwerkzeugs ein Etikett (4) aufgelegt, dort gehalten und während oder unmittelbar nach dem Tiefziehen des Formteils (4) gegen die von den formgebenden Bauteilen (8) abgewandte Oberfläche des Formteils (4) gepresst wird, **dadurch gekennzeichnet, dass** die Anpressplatte (28) über ein Temperiermedium temperiert wird.

2. Verfahren nach Anspruch 1, **dadurch gekennzeichnet, dass** die Temperierung in Form eines Regelkreises auf einer vorgegebenen Temperatur erfolgt.

3. Verfahren nach Anspruch 1 oder 2, **dadurch gekennzeichnet, dass** die Temperatur der Anpressplatte (28) von der Temperatur der formgebenden Bauteile (8) abweicht.

4. Verfahren nach einem der Ansprüche 1 bis 3, **dadurch gekennzeichnet, dass** zeitweise über die Bohrung (29), die zum Anlegen von Vakuum am Etikett (30) dient, Druckluft zum Temperieren des Formteils (4) zugeführt wird.

5. Formwerkzeug zum Tiefziehen eines Formteils (4) aus einer erwärmten thermoplastischen Kunststofffolie und zum Aufbringen eines Etiketts (30) auf eine Oberfläche des Formteils (4) während des Tiefziehvorganges, mit mindestens einem Formnest, bestehend aus einem Oberteil (1) mit formgebenden Bauteilen (8) und einem Unterteil (2), wobei im Unterteil (2) pro Formnest eine verschiebbare Anpressplatte (28) mit einer Einrichtung zum Festhalten eines Etiketts (30) auf ihrer Oberfläche vorgesehen ist, **dadurch gekennzeichnet, dass** die Anpressplatte (28) mit einer Temperiereinrichtung versehen oder verbunden ist.

6. Formwerkzeug nach Anspruch 5, **dadurch gekennzeichnet, dass** die Anpressplatte (28) einen Temperatursensor aufweist, über den eine Regelung des Temperaturverhaltens der Anpressplatte (28) erfolgt.

7. Formwerkzeug nach Anspruch 5 oder 6, **dadurch gekennzeichnet, dass** die Bohrung (29) zum Anlegen von Vakuum taktweise auch mit einer Druckluftquelle in Verbindung gebracht werden kann.

## Claims

1. Process to apply a label on a heated thermoplastic foil with a thermoformed part (4) of a forming tool while or immediately after the thermoforming process, while the thermoformed part (4) is in the forming tool. The forming tool exists of an upper part (1) with forming components (8) and a bottom part (2) with a movable pressure plate (28) per form cavity. Before closing the forming tool a label (30) will be apply on the pressure plate (28), hold on and while or immediately after thermoforming the forming part (4) pressed against the averted surface of the forming part (4) of the forming components (8). This is **characterized in that**, the pressure plate (28) which is tempered over a tempering medium.

2. Process on claim 1 is **characterized in that**, the tempering from the mold happens with a control loop on a selected temperature.

3. Process on claim 1 or 2 is **characterized in that**, the temperature of the pressure plate (28) is different to the temperature of the forming components (8).

4. Process on one of the claims 1 to 3 is **characterized in that**, the compressed air which over the drill hole (29) apply for tempering the forming part (4). The drill hole (29) serves spreading vacuum on the label (30).

5. The forming tool for thermoforming a forming part (4) of a heated thermoplastic foil and to apply a label (30) on a surface of the forming parts (4) while the thermoforming process with minimum one form cavity exists of an upper part (1) with forming components(8) and a bottom part (2). In the bottom part (2) is per each form cavity a movable pressure plate (28) with an arrangement to fix the label (30) on it's surface intended. This is **characterized in that**, the pressure plate (28) is performed or connected with a tempering arrangement

6. The forming tool on claim 5 is **characterized in that**: the pressure plate (28) has a temperature sensor. The regulation of temperature behaviour from the pressure plate (28) results through the temperature sensor.

7. The forming tool on claim 5 or 6 is **characterized in that**: the drill hole (29) to apply the vacuum can be linked to a compressed air source.

## Revendications

1. Procédé d'inclusion d'une étiquette sur une pièce moulée (4) obtenue par emboutissage profond, à partir d'un film de matière thermoplastique chauffée, pendant ou après l'arrêt d'une opération d'emboutissage profond, tandis que la pièce moulée (4) se trouve encore dans l'outil de moulage, et l'outil de moulage est composé d'une partie supérieure (1) avec composants formants (8) et d'une partie inférieure (2) avec une plaque de compression coulissante (28) pour chaque cavité de moulage. Avant fermer l'outil de moulage une étiquette (30) est posée et tenue sur cette plaque de compression coulissante (28) et pressée contre la surface située à l'opposé des composants formants (8) pendant ou après l'arrêt d'une opération d'emboutissage profond (4), **caractérisé par** une plaque de compression (28) dans laquelle un fluide d'équilibrage de température règle la température.

2. Procédé selon la revendication 1, **caractérisé en ce que** la régulation de température est réglée par un circuit de régulation à une température prédéterminée.

3. Procédé selon la revendication 1 ou 2, **caractérisé en ce que** la température de la plaque de compression (28) diffère de la température des composants formants (8).

4. Procédé selon la revendication 1 à 3, **caractérisé en ce que** temporairement la fourniture d'air comprimé par un trou de forage (29), qui sert à l'application de vide sur l'étiquette, sert à tempérer la pièce moulée (4).

5. L'outil de moulage pour l'emboutissage profond d'une pièce moulée (4) à partir d'un film de matière thermoplastique chauffée et à l'application d'une étiquette (30) sur une surface du pièce moulée (4), pendant l'opération d'emboutissage, présentant au moins une cavité de formage, composé d'une partie supérieure (1) avec composants formants (8) et d'une partie inférieure (2) avec une plaque de compression coulissante (28) pour chaque cavité de moulage, qui comprend en outre des moyens pour tenir les étiquettes (30) sur son surface, **caractérisé par** une plaque de compression (28) liée avec un dispositif de régulation de température.

6. Outil de moulage selon la revendication 5, **caractérisé en ce que** la plaque de compression (28) contient un capteur de température qui dirige le comportement en température de la plaque de compression (28).

7. Outil de moulage selon la revendication 5 ou 6, **caractérisé en ce que** le trou de forage (29) pour la fourniture d'air comprimé peut être raccordé par intermittence aussi à une source d'air comprimé.
